Europäisches Patentamt

European Patent Office

Office européen des brevets

(19)

(11) **EP 1 139 554 A2**

(12) # EUROPEAN PATENT APPLICATION

(43) Date of publication:
**04.10.2001 Bulletin 2001/40**

(51) Int Cl.⁷: **H02P 1/26**

(21) Application number: **01106648.7**

(22) Date of filing: **16.03.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **29.03.2000 US 537619**

(71) Applicant: **MICROCHIP TECHNOLOGY INC.
Chandler, AZ 85224-6199 (US)**

(72) Inventor: **Butler, Dan
Chandler, Arizona 85246 (US)**

(74) Representative: **Patry, Didier Marcel Pierre
Baker Botts
45 Ludgate Hill
London EC4M 7JU (GB)**

(54) **Microcontroller operated electric motor soft start using a table drive equation with variable timing**

(57)    An improved current limiter for electrical circuits utilizes a current limiter, a clock, a memory and a processor. The memory contains a two dimensional table having time data in the first dimension and current data in the second dimension. When a control line is activated, the processor receives timing data from the clock in discrete timing events. For each timing event, the processor looks up a current value using the two dimensional table. The current value is then applied by the processor to a current limiter that limits the current to a circuit. The look up sequence can utilize discrete (rounded) timing values, linear interpolation, curve fit interpolation, or other interpolation techniques that can be processed by the processor. The two dimensional table can be pre-loaded from an external source or, in the alternative, the processor can calculate the discrete time values and current values and then load the two dimensional table before operation of the device.

Figure 2

EP 1 139 554 A2

**Description**

The present invention is related to electric motors. More specifically, the present invention is related to the control of startup voltage to electric motors through the use of microcontrollers.

A large part of the load on an electric power system consists of electric motors. At home (air conditions, hair dryers, blenders), in the shop (tools, fans), in the office (printers, cooling fans for electronic devices), and of course in factories, electric motors are everywhere. Although there are many types of electric motors, at least 90% are induction motors. Typically, small electric motors are based on single-phase induction. Larger motors tend to be three phase induction motors.

A typical induction motor has an electrical input of voltage and current, a mechanical output in the form of torque and rotation, and losses represented by heat. The motor consists mechanically of a *stator,* which does not rotate, and a *rotor* that can rotate. An air gap exists between the rotor and the stator to permit rotation of the former.

Electrical force in the form of torque is produced by currents interacting with magnetic flux. A field circuit is used to produce the magnetic flux. An armature circuit is used to carry the current. The field circuit usually has many turns of a wire carrying relatively small currents. The armature normally has a few turns of larger wire carrying relatively large currents. Depending on the type of motor, the field might be on the rotor or the stator. The armature is always opposite the field. For induction motors, the field is on the stator and the armature is on the rotor.

Starting Characteristics

Owing to the large currents drawn when motors are started direct on line, it is necessary for some limitations to be imposed to avoid disturbances to the supply system. These disturbances not only cause an annoying flicker to lights, and problems with TV sets, but in extreme cases may cause sensitive relays to operate, or cause disruption to essential machinery or medical equipment. Therefore, all supply authorities restrict the starting currents to a maximum allowable level, and the restrictions of all the larger authorities are calculated on a similar basis. The maximum currents are stated in supply authority regulations.

When operated from a constant-frequency supply, the three-phase induction motor constitutes essentially a constant-speed drive, with the speed decreasing only 1 to 5 percent as load torque is increased from zero to rated value. In most installations, induction motors can be started and brought up to speed by connecting the stator terminals directly to the electric supply. This establishes the rotating field in the machine. At zero speed the velocity of this field, relative to that of the rotor, is high. If the rotor current were limited only by the resistance of the rotor bars, the rotor currents would be extremely high. The starting current is, however, limited by additional paths for the magnetic field around the stator and rotor conductors, known as flux leakage paths. Usually, the starting current is thus limited to about four to seven times rated current when started on full voltage. The torque at starting is usually in the range of 1.75 to 2.5 times rated value.

If the stator current on starting is larger than is permissible from the electric supply system, the motor may be started on a reduced voltage of about 70 to 80 percent using a step-down transformer. Alternatively, the stator windings can be connected in wye to start and can be switched to delta as the speed approaches rated value. Such measures reduce the starting torque substantially. A reduction in the starting voltage to 75 percent results in a reduction in the electric supply current to 56 percent but also results in only 56 percent of the starting torque that would be provided with full voltage.

Other motor starters insert a resistance or inductance in series with each stator phase during the starting period.

Protection

The heat generated by power losses in the conductors and iron parts of the machine, as well as the friction heat, must be removed by the cooling system to limit the temperature of the motor. The main purpose of protection apparatus is to prevent damage to the most vulnerable part of the motor, the insulation on the windings. For low-power motors, a temperature-sensitive device is often mounted inside the motor and used to switch off the electric supply if the temperature reaches its limiting value. With larger motors, temperature-sensitive detectors may be imbedded at one or more locations in the stator windings.

Wound-rotor induction motors

Some special induction motors are constructed with insulated coils in the rotor similar to those in the stator winding. The rotor windings are usually of a three-phase type with three connections made to insulated conducting rings (known as slip rings) mounted on an internal part of the rotor shaft. Carbon brushes provide for external electric connections.

A wound-rotor motor with three resistors connected to its slip rings can provide a high starting torque without excessive starting current. By varying the resistance, a degree of speed control can be provided for some types of mechanical load. The efficiency of such drives is, however, low unless the speed is reasonably close to the synchronous value because of the high losses in the rotor circuit resistances. As an alternative, an electronic rectifier-inverter system can be connected to the rotor slip rings to extract power and feed it back to the electric supply system. This arrangement, normally called a slip recovery system, provides speed control with acceptable efficiency.

The development of induction motors

The development of a rotating field in an induction machine requires a set of currents displaced in phase flowing in a set of stator windings that are displaced around the stator periphery. While this is straightforward where a three-phase supply is available, most commercial and domestic supplies are only of a single phase, typically with a voltage of 120 or 240 volts. There are several ways in which the necessary revolving field can be produced from this single-phase supply.

Capacitor induction motor

This motor is similar to the three-phase motor except that it has only two windings on its stator displaced 90º from each other. One winding is connected directly to the single-phase supply. For starting, the other winding (commonly called the auxiliary winding) is connected through a capacitor (a device that stores electric charge) to the same supply. The effect of the capacitor is to make the current entering the second set of winding lead the current in the first set of windings by approximately 90º, or one-quarter of a cycle, with the rotor at standstill. Thus, the rotating field and the starting torque are provided.

As the motor speed approaches its rated value, it is no longer necessary to excite the auxiliary winding to maintain the rotating field. The currents produced in the rotor squirrel-cage bars as they pass the winding a-a' are retained with negligible change as they rotate past the second set of winding. The rotor can continue to generate the rotating field with only the first set of windings connected. The second set of windings are usually disconnected by a centrifugal switch that opens when the speed is about 80 percent of rated value.

Power ratings for these capacitor-start induction motors are usually restricted to about two kilowatts for a 120-volt supply and 10 kilowatts for a 230-volt supply because of the limitations on the voltage drop in the supply lines, which would otherwise occur on starting. Typical values of synchronous speed on a 60-hertz supply are 1,800 or 1,200 revolutions per minute for four- and six-pole motors, respectively. Lower-speed motors can be constructed with more poles but are less common.

The efficiency of the motor can be somewhat increased and the line current decreased by the use of two capacitors, only one of which is taken out of the circuit (by means of a centrifugal switch) as the rated speed is approached. The remaining capacitor continues to provide a leading current approximating a two-phase supply. This arrangement is known as a capacitor-start, capacitor-run motor. Capacitor induction motors are widely used for heavy-duty applications requiring high starting torque. Examples are refrigerator compressors, pumps, and conveyors.

Split-phase motors

An alternative means of providing a rotating field for starting is to use two stator windings where the auxiliary winding is made of more turns of smaller conductors so that its resistance is much larger than that of the first winding. The effect of this is that the current in the second phase leads that of first phase, but only by about 20-30 degrees at standstill. While the field is largely pulsating, it contains enough rotating component to provide a starting torque of 1.5 to 2.0 times rated value. To prevent overheating, the auxiliary winding is disconnected by a centrifugal switch when the speed reaches 75-80 percent of rated value. These split-phase motors are inexpensive to produce and are installed in many domestic appliances. Where more than one steady speed is required, as in household laundry appliances, the motor may be wound for two alternative pole pairs, one for low speed and the other for high speed.

Shaded-pole motors

The shaded-pole motor is provided with a main winding connected to the single-phase electric supply. In addition, it has a permanently short-circuited winding located ahead of the main winding in the direction of rotation. This second winding is known as a shading coil and consists of one or more shorted turns. The shading coil delays the establishment of magnetic flux in the region that it encircles and thus produces a small component of rotating field at standstill.

The starting torque is small, typically only 30 to 50 percent of the rated torque. As a result, the motor is suitable only for mechanical loads, such as fans, for which the torque is low at low speed and increases with speed.

Shaded-pole motors are inefficient because of the losses in the permanently shorted winding. As a result, they are used only in small power ratings where efficiency is less important than initial cost. Typical efficiencies are up to 30 percent in larger units and less than 5 percent in very small ones. They are used mainly for fans and other small household appliances.

Servomotors

A servomotor is a small induction motor with two stator windings displaced 90º with respect to each other around its periphery. The rotor is usually of the squirrel-cage type but made with relatively high resistance conductors. The purpose of the motor is to provide a controlled torque in either direction of operation. To achieve this, one winding is connected to a single-phase, constant-frequency supply. The other winding is provided with a voltage of the same frequency, displaced 90º in phase. This voltage is normally provided by an electronic amplifier with a low power signal input. The motor torque is approximately proportional to the voltage on this second winding and thus to the signal input. The direction of the torque can be reversed by changing the input signal from 90º leading to 90º lagging.

On some servomotors the rotor consists of an aluminum cup fitted in the air gap between the stator and a stationary iron core. This rotor has low inertia and is capable of high acceleration. Servomotors are made only in small power ratings because of their high losses and low efficiency. They are used in position-control systems.

Linear induction motors

A linear induction motor provides linear force and motion rather than rotational torque.
The shape and operation of a linear induction motor can be visualized by making a radial cut in a rotating induction machine and flattening it out. The result is a flat "stator," or upper section, of iron laminations that carry a three-phase, multipole winding with conductors perpendicular to the direction of motion. The "rotor," or lower section, could consist of iron laminations and a squirrel-cage winding but more normally consists of a continuous copper or aluminum sheet placed over a solid or laminated iron backing.

An emerging application of linear motors is in rapid-transit vehicles for public transportation. The stator (as described above) is carried on the underside of the vehicle, and the rotor is located between the rails on the track. An advantage of this type of propulsion is that high acceleration and braking can be obtained without dependence on adhesion of the steel wheels to the steel rails in the presence of rain, ice, or a steep slope.

Electrical power is supplied to such a rapid-transit vehicle through sliding connections to an energized rail or overhead wire. To provide speed control and braking, an electronic power-conditioning apparatus on board the vehicle produces a three-phase output of the desired voltage and frequency.

In an alternative arrangement for vehicle propulsion, the copper and iron sheets can be placed on the underside of the vehicle and sections of stator can be placed at intervals along the track. This has the advantage that no electric power need be supplied to the vehicle itself.

Linear induction motors also are used to drive conveyors, sliding doors, textile shuttles, and machine tools. Their advantage is that no physical contact is required and thus wear and maintenance are minimized. In another form, linear motors are used as electromagnetic pumps where the rotor consists of a conducting fluid, such as a liquid metal (say, mercury of sodium-potassium alloy).

The efficiency of linear motors is somewhat less than that of rotating motors because of end effects. Its "rotor" must be magnetized as it comes under the "stator." This reduces the effectiveness of the first one or two pole spans. The input current is also relatively
high because the air gap is usually larger than in rotating machines and more current is required to produce the magnetic field across it.

Induction motors for speed and position control

On a constant-frequency supply, an induction motor is essentially a near-constant speed drive. Induction motors, however, can be used to provide accurate speed and position control in either direction of rotation by furnishing a controllable-voltage, controllable-frequency three-phase supply. This is done by means of an electronic inverter.

Using semiconductor switches (e.g., transistors or thyristors), the utility supply is converted into a set of three near-sinusoidal inputs of controlled voltage and frequency to the stator winding. The speed of the motor will then approach the synchronous value of 120 f/p revolutions per minute for a controlled frequency of f cycles per second. Reversal of the phase sequence from abc to acb reverses the direction of the torque. For accurate control of speed or of position, the speed of the shaft can be monitored by a tachometer or position sensor and compared with a signal representing the desired value. The difference is then used to control the inverter frequency. Generally, the voltage varies directly with the frequency to keep the magnitude of the magnetic field constant.

Synchronous motors

Such a motor is one in which the rotor normally rotates at the same speed as the revolving field in the machine. The stator is similar to that of an induction machine consisting of a cylindrical iron frame with windings, usually three-phase, located in slots around the inner periphery. The difference is in the rotor, which normally contains an insulated winding connected through slip rings or other means to a source of direct current.

The principle of operation of a synchronous motor can be understood by considering the stator windings to be connected to a three-phase alternating-current supply. The effect of the stator current is to establish a magnetic field rotating at 120 f/p revolutions per minute for a frequency of f hertz and for p poles. A direct current in a p-pole field winding on the rotor will also produce a magnetic field rotating at rotor speed. These two magnetic fields will tend to align with each other. With no load torque, they may be assumed to be in alignment. As mechanical load is applied, the rotor slips back a number of degrees with respect to the rotating field of the stator, developing torque and continuing to be drawn around by this rotating field. The angle between the fields increases as load torque is increased. The maximum available torque is achieved for given magnitudes of stator and rotor currents when the angle by which the rotor field lags the stator field is 90º. Application of more load torque will stall the motor.

One advantage of the synchronous motor is that the magnetic field of the machine can be produced by the direct current in the field winding, so that the stator windings need to provide only a power component of current in phase with the applied stator voltage--i.e., the motor can operate at unity power factor. This condition minimizes the losses and heating in the stator windings.

The power factor of the stator electrical input can be directly controlled by adjustment of the field current. If the field current is increased beyond the value required to provide the magnetic field, the stator current changes to include a component to compensate for this overmagnetization. The result will be a total stator current that leads the stator voltage in phase, thus providing to the power system reactive volt-amperes needed to magnetize other apparatuses, such as transformers and induction motors. Operation of a large synchronous motor at such a leading power factor may be an effective way of improving the overall power factor of the electrical loads in a manufacturing plant to avoid additional electric supply rates that may otherwise be charged for low power-factor loads.

Three-phase synchronous motors find their major application in industrial situations where there is a large, reasonably steady mechanical load, usually in excess of 300 kilowatts, and where the ability to operate at leading power factor is of value. Below this power level, synchronous machines are generally more expensive than induction machines. In some instances, a synchronous machine is installed for the sole purpose of improving overall plant power factor. In this case, it is called a synchronous capacitor because it provides the same power factor correction as capacitors connected across the supply line.

The field current may be supplied from an externally controlled rectifier through slip rings, or, in larger motors, it may be provided by a shaft-mounted rectifier with a rotating transformer or generator.

A synchronous motor with only a field winding carrying a direct current would not be self-starting. At any speed other than synchronous speed, its rotor would experience an oscillating torque of zero average value as the rotating magnetic field repeatedly passes the slower moving rotor. Normally, a short-circuited winding similar to that of an induction machine is added to the rotor to provide starting torque. The motor is started, either with full or reduced stator voltage, and brought up to about 95 percent of synchronous speed, usually with the field winding short-circuited to protect it from excessive induced voltage. The field current is then applied and the rotor pulls into synchronism with the revolving field.

This additional rotor winding is usually referred to as a damper winding because of its additional property of damping out any oscillation that might be caused by sudden changes in the load on the rotor when in synchronism. Adjustment to load changes involves changes in the angle by which the rotor field lags the stator field and thus involves short-term changes in instantaneous speed. These cause currents to be induced in the damper windings, producing a torque that acts to oppose the speed change.

Protection for synchronous motors is similar to that employed with large induction motors. Temperature may be sensed in both the stator and field windings and used to switch off the electric supply. Considerable heating occurs in the rotor-damper winding during starting, and a timer is frequently installed to prevent repeated starts within a limited time interval.

Permanent-magnet motors

The magnetic field for a synchronous machine may be provided by using permanent magnets rather than a field winding. This eliminates the need for slip rings and an external source

of field current and provides a simple rugged rotor. The motor does not, however, have a means of controlling the stator power factor.

The rotor can be of the form that has radially directed magnets made of neodymium-boron-iron, samarium-cobalt, or ferrite. If the machine does not contain a damper winding, it cannot be started on a constant-frequency supply. The main application for a motor of this type is in variable-speed drives where the stator is supplied from a variable-frequency, variable-voltage source. Where starting capability is required, the magnets are imbedded in the rotor iron and a damper winding is placed in slots in the rotor surface.

An alternative form of permanent-magnet motor is an eight-pole synchronous motor. Circumferentially directed magnets provide flux to iron poles, which in turn set up a radial field in the air gap. This form is particularly suitable for small motors using ferrite magnets.

Hysteresis motors

A distinctive feature of synchronous motors is that the speed is uniquely related to the supply frequency. As a result, several special types of synchronous motors have found wide application in devices such as clocks, tape recorders, and phonographs. One of the most extensively used is the hysteresis motor in which the rotor consists of a ring of a semi-permanent magnet material like a high-carbon steel. At full speed, the motor operates as a permanent-magnet machine. If the speed is reduced by pulling the rotor out of synchronism, the stator field causes the rotor material to be cyclically magnetized around its hysteresis loop, resulting in a rotor field that lags the stator field by a few degrees and continues to produce torque. These motors provide good starting torque and are very quiet. Their efficiency is low, and applications are restricted to small power ratings.

Reluctance motors

Machines of this kind operate on the principle that forces are established tending to minimize the volume of any air gap in an iron system carrying a magnetic field. Typically, the rotor consists of four iron poles with no electrical windings. The stator has six poles each with a current-carrying coil. In the condition represented in the figure, current has just been passed through a first set of coils, producing a torque on the rotor aligning two of its poles with those of the stator associated with the first set of coils. The current is now switched off in the first set of coils and switched on to the second set of coils. This produces a counterclockwise torque on the rotor aligning two rotor poles with the stator poles associate with the second set of coils. This process is then repeated with stator associated with a third set of coils and then with the first set of coils. The torque is dependent on the magnitude of the coil currents but is independent of its polarity. The direction of rotation can be changed by changing the order in which the coils are energized.

The currents in the stator coils are usually controlled by semiconductor switches connecting the coils to a direct voltage source. A signal from a position sensor mounted on the motor shaft is used to activate the switches at the appropriate time instants.

Frequently a magnetic sensor based on the Hall effect is employed. (The Hall effect involves the development of a transverse electric field in a semiconductor material when it carries a current and is placed in a magnetic field perpendicular to the current.) The overall system is known as a self-synchronous motor drive. It can operate over a wide and controlled speed range.

There are several other configurations for reluctance motors. In one form, the rotor consists of an iron ring with radial cuts or slots through it. A p-pole rotor has p sectors, or arcs. The magnetic flux travels circumferentially around the arc of this rotor ring, completing the path between adjacent stator poles.

In another form, the rotor has salient poles but is without the field windings. The stator is cylindrical and contains a three-phase winding connected to a constant-frequency supply. A damper winding is fitted in the rotor surface so that the machine can start as an induction motor. After the rotor pulls into synchronism with the rotating field of the stator, it operates as a synchronous motor at constant speed.

Single-phase synchronous motors

A revolving field can be produced in synchronous motors from a single-phase source by use of the same method as for single-phase induction motors. With the main stator winding connected directly to the supply, an auxiliary winding may be connected through a capacitor. Alternatively, an auxiliary winding of a higher resistance can be employed. For small clock motors, the shaded-pole construction of the stator is widely used in combination with a hysteresis-type rotor (see above). The efficiency of these motors is very low, usually less than 2 percent, but the cost is low as well.

Direct-current commutator motors

In an elementary form of a DC motor, a stationary magnetic field is produced across the rotor by poles on the stator. These poles may be encircled by field coils carrying direct current, or they may contain permanent magnets. The rotor or armature consists of an iron core with a coil accommodated in slots. The ends of the coil are connected to the bars of a commutator switch mounted on the rotor shaft. Stationary graphite brushes lead to external terminals.

Suppose a direct-current supply is connected to the armature terminals such that a current enters at the positive terminal. This current interacts with the magnetic flux to produce a counterclockwise torque, which in turn accelerates the rotor. When the rotor has turned about 120º, the connection from the supply to the armature coil is reversed by the commutator. The new direction of the current in the armature coil is such as to continue to produce counterclockwise torque. As the rotor rotates in a counterclockwise direction, a voltage proportional to the speed is generated in the armature coil. While this coil voltage is alternating, the commutator action produces a unidirectional voltage at the motor terminals with the polarity shown. The electrical input will be the product of this terminal voltage and the input current. The mechanical output power will be the product of the rotor torque and speed.

In a practical DC motor, the armature winding consists of a number of coils in slots, each spanning 1/p of the rotor periphery for p poles. In small motors the number of coils may be as low as six, while in large motors it may be as large as 300. The coils are all connected in series, and each junction is connected to a commutator bar. If current enters at the positive brush, the coil currents have the directions shown. All coils under the poles contribute to torque production.

A typical small DC motor, such as those used in automobile fans, contains two poles made of ferrite permanent-magnet material. When higher torque is required, as, for example, in the starter motor of an automobile, stronger magnets such as neodymium-iron-boron may be employed. When the terminals of this motor are connected to a constant direct-voltage source, such as a battery, the initial current will be limited only by the resistance of the armature winding and the brushes. The torque produced by the interaction of this current with the field accelerates the rotor. A voltage is generated in the winding proportional to the speed. This voltage opposes that of the source, thus reducing the current and the torque. With no mechanical load, the generated voltage will rise to a value nearly equal to the source voltage, allowing just enough current to provide for friction torque. Application of a load torque slows down the rotor, decreasing the generated voltage, increasing the current, and producing torque to match the load torque.

With larger motors, the armature winding resistance is too low to limit the current on starting to a value that can be switched by the commutator. These motors are normally started with a resistance connected in series to the armature supply. This resistance is usually decreased in stages as the speed increases.

Some types of permanent-magnet commutator motors have no provision for speed control when attached to a constant-voltage supply. If speed adjustment is desired, the permanent-magnet field can be replaced by iron poles with field coils. These coils can be provided with current from the same supply as for the armature or from a separate supply. A variable series resistor can be used to adjust the field current. With maximum field current and thus maximum magnetic flux, the generated voltage will equal the supply voltage at a minimum value of no-load speed. As load is added, the speed will reduce somewhat and the armature current will increase to produce the required torque. If the field current is reduced, the motor will have to rotate faster through the reduced flux to generate the same voltage. The no-load speed will be increased. For a given rated armature current, the available torque will be reduced because of the reduced flux. The motor, however, will be able to provide the same mechanical power at a higher speed and lower torque.

Commutator motors with adjustable field current are known as shunt motors, or separately excited motors. Normally, the available speed range is less than 2 to 1, but special motors can provide a speed range of up to 10 to 1.

Another form of commutator motor is the series motor in which the field coils, with relatively few turns, carry the same current as does the armature. With a high value of current, the flux is high, making the torque high and the speed low. As the current is reduced, the torque is reduced and the speed increases. In the past, such motors were widely used in electric transportation vehicles, such as subway trains and fork-lift trucks.

Large DC motors usually have four or more poles to reduce the thickness of the required iron in the stator yoke and to reduce the length of the end connections on the armature coils. These motors may also have additional small poles, or interpoles, placed between the main poles and have coils carrying the supply current. These poles are placed so as to generate a small voltage in each armature coil as it is shorted out by the commutator. This assists the quick reversal of current in the coil and prevents commutator sparking.

DC commutator motors have been extensively used in steel mills, paper mills, robots, and machine tools where accurate control of speed or speed reversal, or both, are required. The field is supplied from a separate voltage source, usually with constant field current, or from permanent magnets. The armature is supplied from a source of controllable voltage. The speed is then approximately proportional to the source voltage. Reversal of the armature supply voltage at a controlled rate reverses the motor.

Alternating-current commutator motors

A specially designed series-commutator motor may be operated from a single-phase alternating voltage supply. When the supply current reverses, both the magnetic field and the armature current are reversed. Thus, the torque remains in the same direction. These motors are often called universal motors because they may be used with either a direct-voltage supply or with a 60-hertz alternating-voltage supply. They have wide application in such small domestic appliances as mixers, portable tools, and vacuum cleaners.

While some of the start up current limitations are useful, they are not particularly flexible. There is, therefore, a need in the art for additional methods to regulate the starting current to electric motors. It is an object of the present invention to provide a unique and versatile apparatus and method to regulate the starting current of electric motors.

The present invention solves the problems inherent in the prior art by providing a processor and memory that is used to regulate or otherwise to limit the amount of current flowing into a circuit or device such as an electric motor. In the preferred embodiment of the present invention includes a one dimensional table having pre-loaded sequence of current values. System time, provided by an internal clock or peripheral device, is used as an index into the one-dimensional table in order to retrieve the desired current value from the table. The current value is then applied to the circuit in question to limit the current to that current value.

In alternate embodiments of the present invention, a two-dimensional table in the memory is pre-loaded with a sequence of time values (in one "column") and current values (in the other "column"). Upon initiation of the power up condition, the processor receives time inputs from a clock. In one embodiment, the clock resides with the microprocessor within an integrated circuit chip. In an alternate embodiment, a system clock is used to input time values to the processor. In either case, the processor utilizes the clock's time value and the data in the two dimensional array to determine or otherwise to calculate a current limit value. The current limit value is then applied by the processor to a current limiter such as a FET switch (DC) or triac controller (AC) in order to limit the current going into the circuit. The process of obtaining a new time value from the clock and applying a corresponding new current limit is repeated until, typically, a steady-state current value is achieved. This invention is particularly well suited for limiting the start up current to electric motors but it is also useful for other applications.

In one embodiment, the clock's time value is rounded off (up or down) to the closest discrete time value and is used as an offset into the table in order to retrieve the current value and apply that to the current limiter.

In an alternate embodiment, the clock's time value is utilized in an interpolation procedure in order to calculate a current value for the specific click time value. The interpolation procedure can be linear, curve fit, spline fit, or any other interpolation procedure known in the art. Utilizing a pre-defined two-dimensional table greatly increases the responsiveness of the processor, which is relived of calculating logarithmic values typical of the first-order transient response of an RL or RC circuit. Unlike the present invention, the real-time logarithmic calculations of the prior art solutions required extensive coding and considerable processing power having corresponding reduced responsiveness and capability.

Other and further objects, features and advantages will be apparent from the following description of presently preferred embodiments of the invention, given for the purpose of disclosure and taken in conjunction with the accompanying drawings.

Figure 1 is a graph showing the current limit as a function of time;
Figure 2 is a circuit diagram of a current controller of the present invention;
Figure 3 is a flow chart that describes the operation of an alternate embodiment of the present invention;
Figure 4 is a schematic diagram of the computer architecture of the present invention;
Figure 5 is a memory diagram of a table of an alternate embodiment of the present invention before it is generated;
Figure 6 is a memory diagram of a table of an alternate embodiment of the present invention after it is generated;
Figure 7 is a flow chart that describes the operation of the preferred embodiment of the present invention; and
Figure 8 shows a one-dimensional table according to the preferred embodiment of the present invention.

In present invention is applicable to both direct current (DC) and alternating current (AC) circuits. The present invention is particularly suitable for limiting startup current to, for example, an electric motor.

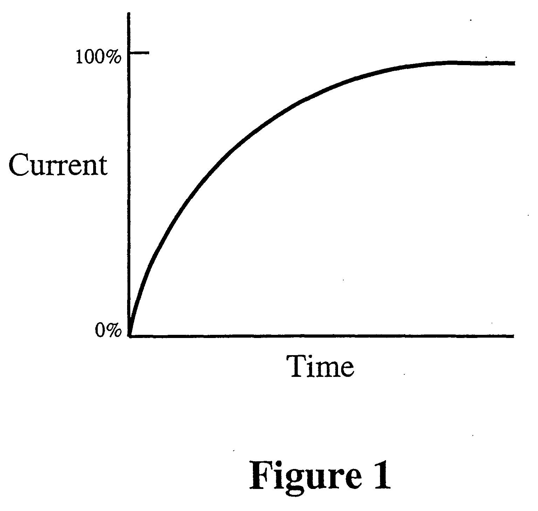

Turning now to the drawings, Figure 1 shows a typical desired response of an RC (resistor/capacitor) circuit that behaves generally according to the following equation:

$$I = 1 - e^{-\frac{t}{rc}}$$

where I is the current, t is the instance in time, r is the resistance, and c is the capacitance of the circuit in question.

In the prior art, the limiting current value at any given instance in time between the start up signal and the steady-state value was calculated by a processor. This calculation required extensive coding and, consequently, a considerable number of processor operation cycles. In fact, it required so much processor capacity that faster and more expensive processors were required. Instead of calculating the equation in real time, the present invention requires creating a pre-computed table representing the equation between the time values of 0 and 255, which is often normalized to 0 and 100, respectively. Instead of varying RC to change the time to 100%, with the present invention, the rate at which the table is stepped through changes the-start-up behavior. The present invention, therefore, allows less powerful microprocessors to be utilized than with prior art devices that required real-time calculation.

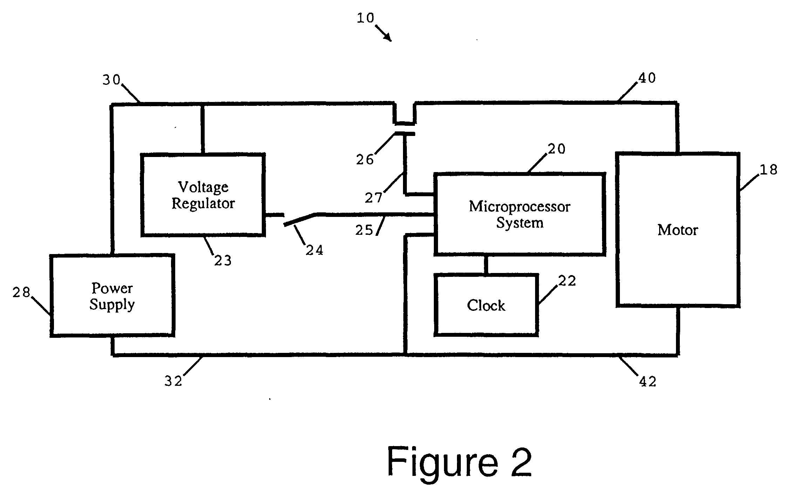

Figure 2 shows the general arrangement of the present invention in operation. The circuit 10 is composed of a microprocessor system 20 that is connected to clock 22. In an alternate embodiment of the present invention, the clock 22 can be incorporated into the microprocessor system 20. A power supply 28 provides power to the circuit 10 through input lines 30 and 32. The circuit 10 is provided with output lines 40 and 42 that connect the main load, in this case a motor 18, to the remainder of the circuit. A current limiter 26 is used to limit the current applied to the motor 18. The current limiter 26 is controlled by the microprocessor system 20. A voltage regulator 23 converts the system voltage to a level appropriate for the microprocessor system 20. A control line 24 that is situated between the voltage regulator 23 and the microprocessor system 20 is used to activate the microprocessor system 20.

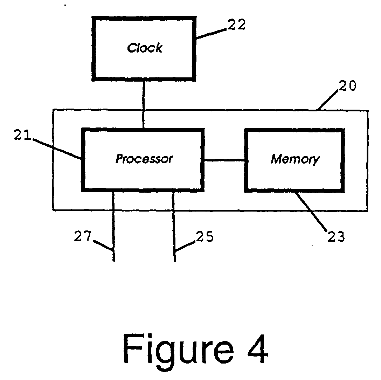

The specific elements of the microprocessor 20 are illustrated in Figure 4. As shown in Figure 4, the microprocessor is composed of the processor 21 and the memory 23. As consistent with Figure 2, the clock 22 is connected to the microprocessor system 20, specifically the processor 21. The processor 21 is also provided with an input line 25 from the control line 24 (of Figure 2) as well as a current limiter signal line 27 that is connected to the current limiter 26 (also shown in Figure 2).

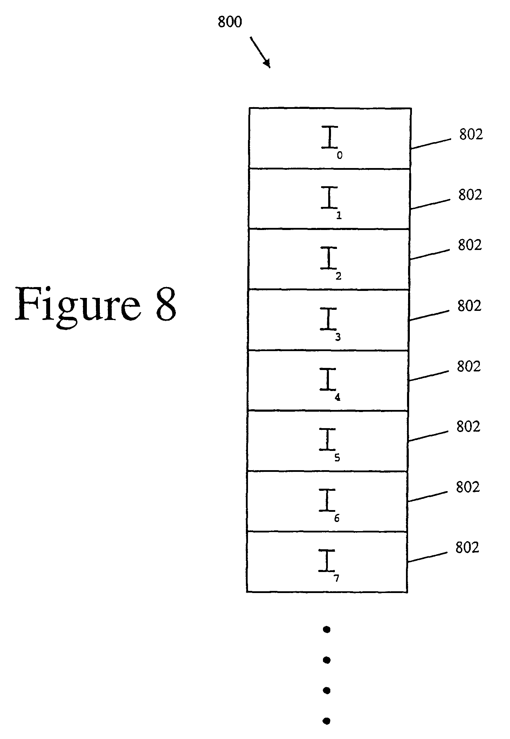

In the preferred embodiment of the present invention, the memory 23 of Figure 4 contains a one-dimensional table. Figure 8 shows a one-dimensional table 800 with a sequence of current values 802. Time values are inferred from the sequence of current values 802. The time values obtained from the clock 22 are used as an offset into the one-dimensional table in the memory 23 in order to return the specific current value 802 from the table that is to be applied to the current limiter 26 of Figure 2.

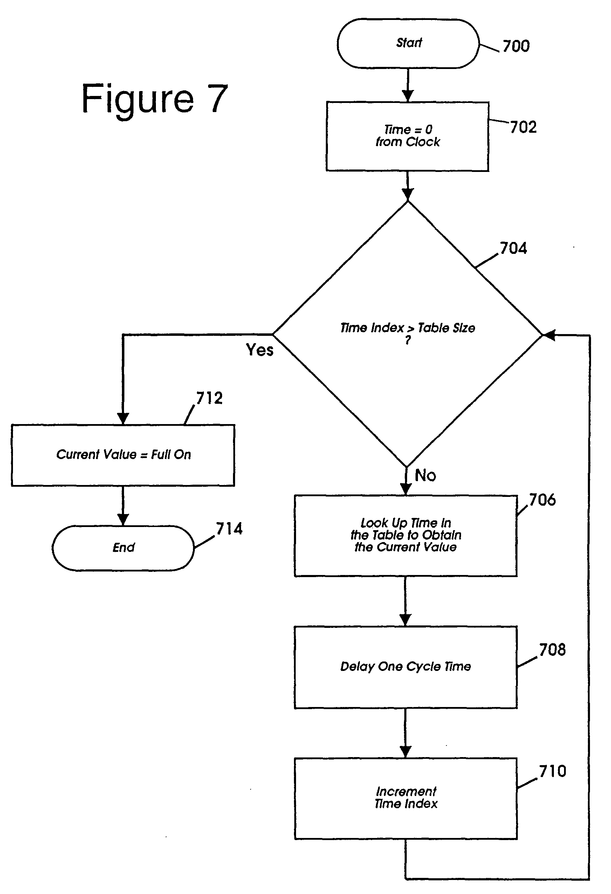

Figure 7 illustrates the operation of the preferred embodiment of the present invention. Referring to Figure 7, the process starts at step 700. The Time Index is set to zero (0) upon an impulse or signal from the clock, step 702. While the clock input signal is not required, it is envisioned within the preferred embodiment that the clock and the time index are synchronized in some manner. Next, in step 704, the value of the Time Index is compared to the size of the table. If the Time Index is larger than the number of current value entries in the one-dimensional table, then the current value is set to full on, step 712, and the operation ends, step 714. Otherwise, execution moves to step 706 where the Time Index is used as an offset to look up the corresponding current value from the one-dimensional table. The looked up current value is then applied to the circuit. Next, there is a delay of one cycle, step 708. The delay cycle can be accomplished with a simple circuit of a design known in the art or with software. Thereafter, the Time Index is incremented in step 710. As with the delay (step 708), the design of the Time Index increment can be accomplished with a simple circuit or with software. Moreover, those skilled in the art can appreciate that the sequence of current values in the one-dimensional table can be reversed and step 710 can be a decrement step in order to obtain the same result. Once step 710 is completed, execution is then looped back to step 704 for further processing. It should be noted that the (Time Index) increment value and the delay time (step 708) together control the ramp rate on the motor or other device connected to the circuit in question.

In an alternate embodiment of the present invention, the memory 23 of Figure 4 contains a two dimensional table. The first dimension (column) of the two dimensional table contains time values and the second dimension (column) contains the corresponding current limit values. Table 1 shows a typical two-dimensional table according to the preferred embodiment of the present invention. Specifically the left column contains a time value and the right column contains a current value corresponding to the adjacent time value in a time versus current format that describes the desired current limiting behavior of the circuit 10 in question.

Table 1

| Time Value | Current Value |
| --- | --- |
| 0 | 5 |
| | |
| 1 | 9 |
| 2 | 13 |
| 3 | 17 |

Table 1   (continued)

| Time Value | Current Value |
|---|---|
| 4 | 21 |
| 5 | 25 |
| 6 | 28 |
| 7 | 32 |
| 8 | 35 |
| 9 | 38 |
| ... | ... |
| 96 | 96 |
| 97 | 97 |
| 98 | 98 |
| 99 | 99 |
| 100 | 100 |

It will be understood by those skilled in the art that the table illustrated in Table 1 can be stored in a wide variety of fashions within memory 23 that facilitate the access and retrieval of the two dimensional data stored in the memory 23 by the processor 21. For example, the two dimensional array can be stored in a series of stacks, buffers, registers, or other known methods of storing sequences of data. The operation of the present invention is not dependent upon any specific type of storage mechanism. The present invention only requires that the data making up the two dimensional array be accessible by the processor 21 in a timely fashion.

The memory 23 of Figure 4 may also contain a table having more than two dimensions (i.e. n-dimensions). At least one of the dimensions (columns) holds the time values while the remaining dimensions contains the corresponding current limit values. The dimensions hold distinctive sets of either pre-loaded current limit values or time values. The processor 21 may choose which set of either current limit values or time values to determine the specific current values applied to the circuit 10 at any specific time. The Table 2 shows an example of n-dimensional table.

Table 2

| Time Value | Current Value(1) | Current Value(n-1) | Current Value(n) |
|---|---|---|---|
| 0 | 5 | ... | 2 |
| 1 | 9 | ... | 6 |
| 2 | 13 | ... | 10 |
|  |  |  |  |
| 3 | 17 | ... | 14 |
| 4 | 21 | ... | 18 |
| 5 | 25 | ... | 22 |
| 6 | 28 | ... | 26 |
| 7 | 32 | ... | 30 |
| ... | ... | ... | ... |
| 99 | 99 | ... | 99 |
| 100 | 100 | ... | 100 |

The utility of the multi-dimensional table is that one of the current limit columns can be pre-selected in order to provide a specific soft start behavior. In other situations, one of the other current limit value columns can be selected to provide an alternate start behavior to the circuit. The pre-selection of the particular current limit value column can be permanent, or enacted by software, or by a switch that is manipulated by the user. Mulitple time and/or current limit columns provide a wide variety of start behaviors for circuits. In an alternate embodiment of the present invention, a series of current limit values is pre-loaded into the memory 23 which is a non-volatile memory.

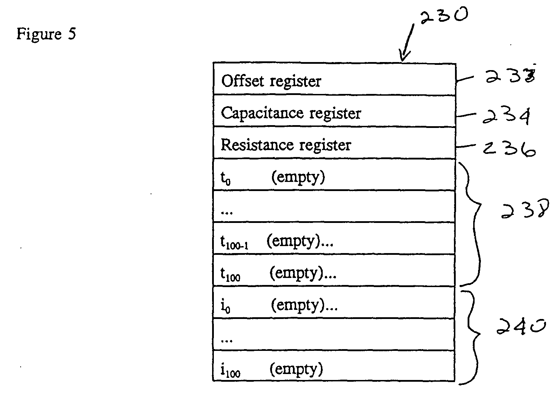

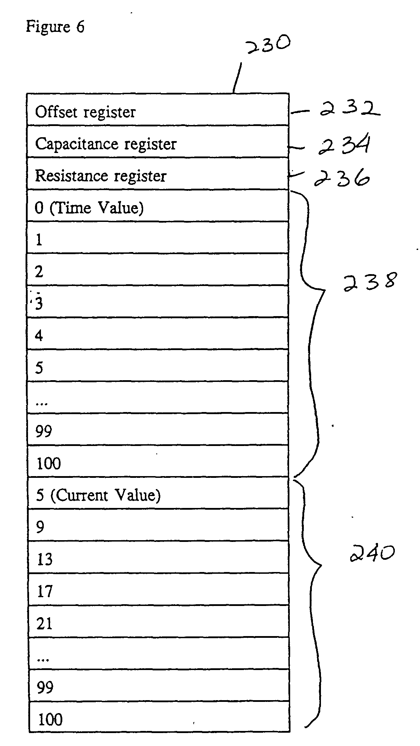

An alternative to a pre-loaded table as described in Table 1 and 2, The processor 21 could generate the table from a pre-loaded resistance and capacitance in memory 23. Once the table is generated, the calculated values are stored into memory 23 for later retrieval in which there is no real time calculation of the equation for future soft starts. Figure 5 shows the memory allocation before processor 21 generates the table. The capacitance register 234 and resistance 236 hold pre-loaded values. The offset register 230 serves as a pointer for the timing and current values in the table contained within the memory 23. The remaining registers 238 and 240 are initially empty until the respective time and current limit values are calculated or loaded. Figure 6 illustrates the memory allocation after which the table has been generated. The registers 238 are filled with the generated time values. The registers 240 are filled with the current limit values. As a result, a table is created containing pre-calculated time and current values for soft starts of the circuit.

If the power supply 28 is an AC power supply, the current limiter 26 can be a Triac Controller or similar or equivalent AC current limiter. If the power supply 28 is a DC power supply, the current limiter 26 can be a FET switch (Power FET), another type of pass transistor, or similar or equivalent DC current limiter. The specific type of current limiter is not critical to the function of the present invention. The current limiter of the present invention can be any current limiter that has the capacity to limit the current input into the circuit 10 according to the current behavior contained within the memory 23 of the microprocessor system 20.

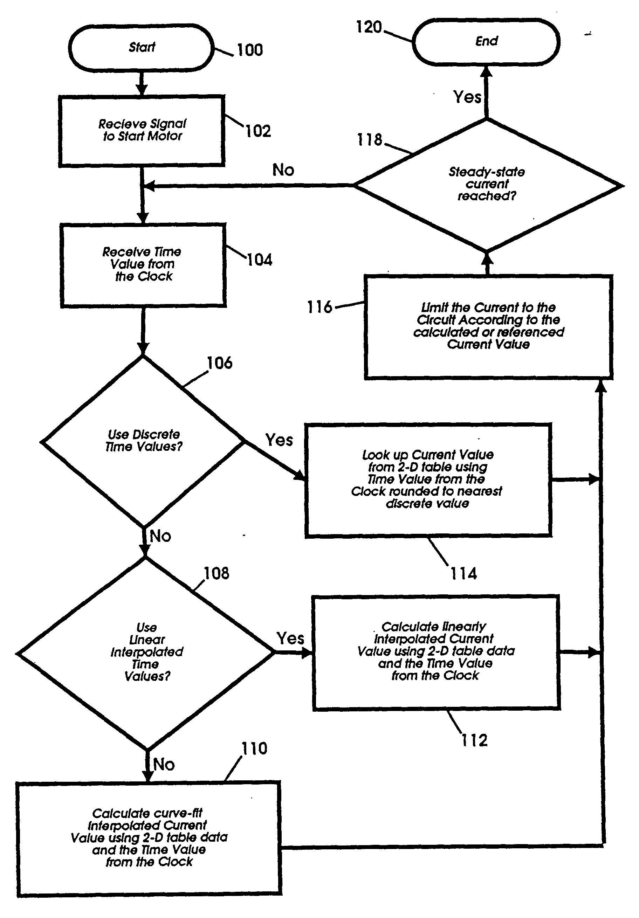

The method of the present invention is illustrated in the flow chart of Figure 3. As shown in Figure 3, the process starts at step 100. In step 102, a signal is received to energize the circuit (e.g., start the motor), usually by closing the control line 24 (see Figure 2). Next, in step 104, the microprocessor system 20 receives a time value from the clock 22. After the time value is received, the two dimensional table is accessed to retrieve relevant data in order to determine the current limit for that instance in time designated by the clock 22. The present invention can utilize a wide range of algorithms to determine or otherwise calculate the current limit value to be applied to the current limiter 26. In the preferred embodiment of the present invention, the time value received from the clock 22 is rounded up or down to a discrete time value that correspond to nearest specific time value in the first dimension of the two dimensional table (steps 106 and 114). In an alternate embodiment, a linear interpolated current limit that is calculated by retrieving the time values (from the first dimension of the two dimensional table) and the corresponding two current values and applying them with the following equation:

$$I_L = \frac{(t-t_1) * (i_2-i_1)}{(t_2-t_1)} + i_1$$

where $t_1$ and $t_2$ correspond to the two time values in the first dimension of the two dimensional table that are closest to the time value t received from the clock 22 and $i_1$ and $i_2$ are the current values in the two dimensional table that correspond to $t_1$ and $t_2$, respectively in order to calculate the returned current limit $I_L$.

Alternatively, a curve fit interpolation, such as a spline fit interpolation, Aitken interpolation, Bessel's interpolation formula, Everett interpolation, extrapolation, Finite Difference, Gauss's interpolation formula, Hermite interpolation, Lagrange interpolating polynomial, Newton-Cotes formulas, Newton's Divided Difference interpolation formula, Osculating interpolation, Thiele's interpolation formula or other interpolation algorithms known in the art can be used with the present invention (step 110).

In all cases, once the current limit is returned, that limit is applied by the processor 20 to the current limiter 26 in step 116 of Figure 3. In step 118, a check is made to determine whether the present time value received by the clock 22 corresponds to a steady-state time value in the two dimensional table contained within the memory 23, i.e., if the clock value corresponds to the last (highest) time value in the two dimensional table. If so, the process ends in step 120. Otherwise, a new time value is received from the clock 22 and the operation repeats starting at step 104 as shown in Figure 3.

The presentinvention, therefore, is well adapted to carry out the objects and attain both the ends and the advantages mentioned, as well as other benefits inherent therein. While the present invention has been depicted, described, and is defined by reference to particular preferred embodiments of the invention, such references do not imply a limitation on the invention, and no such limitation is to be inferred. The invention is capable of considerable modification, alternation, alteration, and equivalents in form and/or function, as will occur to those of ordinary skill in the pertinent arts. The depicted and described preferred embodiments of the invention are exemplary only, and are not exhaustive of the scope of the invention. Consequently, the invention is intended to be limited only by the spirit and scope of the appended claims, giving full cognizance to equivalents in all respects.

**Claims**

1.  A data processor control system that controls a current to a circuit, said control system comprising:

    a current limiter, said current limiter constructed and arranged to regulate said current to said circuit;
    a clock, said clock constructed and arranged to supply a time indicator;
    a memory, said memory constructed and arranged to store a two-dimensional table of values, said table having a first dimension containing timing values and a second dimension containing current values; and
    a processor, said processor constructed and arranged to control said current limiter, said processor further constructed and arranged to access said two-dimensional table in said memory and to receive said time indicator from said clock;
    wherein said processor looks up a limiting current value from said two-dimensional table as a function of said time indicator from said clock and applies said limiting current value to said current limiter in order to limit an input current to said circuit.

2.  A control system as in claim 1 wherein said two dimensional table is pre-loaded from an external source.

3.  A control system as in claim 1 wherein said two dimensional table is pre-loaded from said processor.

4.  A control system as in claim 1 wherein said current limiter is a field effect transistor switch.

5.  A control system as in claim 1 wherein said current limiter is a pass transistor.

6.  A control system as in claim 1 wherein said current limiter is a triac controller.

7.  A method of controlling the current to a circuit, said method comprising the steps of:

    (a) receiving a signal to apply current to a circuit;
    (b) receiving a time value from a clock;
    (c) determining a current value from a two dimensional table in a memory with a processor and said time value from said clock; and
    (d) limiting said current to said circuit according to said current value.

8.  A method as in claim 7 wherein said step of determining comprises the following steps:

    (c1) rounding said time value from said clock to a discrete time value in said two dimensional table to form a rounded time value; and
    (c2) looking up said rounded time value in said two dimensional table and returning a corresponding current value.

9.  A method as in claim 7 wherein said step of determining comprises the following steps:

    (c1) linearly interpolating a current value with said processor using said time value from said clock along with two adjacent time values and corresponding current values from said two dimensional table; and
    (c2) returning said interpolated current value.

10. A method as in claim 7 wherein said step of determining comprises the following steps:

    (c1) curve fit interpolating a current value with said processor using said time value from said clock along with two adjacent time values and corresponding current values from said two dimensional table; and
    (c2) returning said interpolated current value.

11. A method of controlling the current to a circuit, said method comprising the steps of:

    (a) receiving a signal to apply a specific current to a circuit;
    (b) receiving a time value from a clock;
    (c) determining a current value from a three or more dimensional table in a memory with a processor and said time value from said clock; and

(d) limiting said current to said circuit according to said current value.

**12.** A method as in claim 11 wherein said step of determining comprises the following steps:

(c1) rounding said time value from said clock to a discrete time value in said three or more dimensional table to form a rounded time value; and
(c2) looking up said rounded time value in a pre-selected column of said three or more dimensional table and returning a corresponding current value.

**13.** A method as in claim 11 wherein said step of determining comprises the following steps:

(c1) linearly interpolating a current value with said processor using said time value from said clock along with two adjacent time values and corresponding current values from a pre-selected column of said three or more dimensional table; and
(c2) returning said interpolated current value.

**14.** A method as in claim 11 wherein said step of determining comprises the following steps:

(c1) curve fit interpolating a current value with said processor using said time value from said clock along with two adjacent time values and corresponding current values from a pre-selected column of said three or more dimensional table; and
(c2) returning said interpolated current value.

**15.** A data processor control system that controls a current to a circuit, said control system comprising:

a current limiter, said current limiter constructed and arranged to regulate said current to said circuit;
a clock, said clock constructed and arranged to supply a time indicator;
a memory, said memory constructed and arranged to store a table of values, said table having at least two dimensions containing timing values and at least two dimensions containing current values; and
a processor, said processor constructed and arranged to control said current limiter, said processor further constructed and arranged to access said table in said memory and to receive said time indicator from said clock; wherein said processor looks up a limiting current value from said table as a function of said time indicator from said clock and applies said limiting current value to said current limiter in order to limit an input current to a circuit.

**16.** A control system as in claim 15 wherein said table has three or more dimensions that are pre-loaded arrays from an external source.

**17.** A control system as in claim 15 wherein said table has three or more dimensions that are pre-computed arrays from said processor.

**18.** A control system as in claim 15 wherein said current limiter is a field effect transistor switch.

**19.** A control system as in claim 15 wherein said current limiter is a pass transistor.

**20.** A control system as in claim 15 wherein said current limiter is a triac controller.

**21.** A data processor control system that controls a current to a circuit, said control system comprising:

a current limiter, said current limiter constructed and arranged to regulate said current to said circuit;
a clock, said clock constructed and arranged to supply a time indicator to said processor; and
a memory, said memory constructed and arranged to store a table of values, said table having a first dimension containing timing values and at least two additional dimensions, said additional dimensions containing current limit values;
a processor, said processor constructed and arranged to control said current limiter, said processor further constructed and arranged to access said table in said memory and to receive said time indicator from said clock; wherein said processor looks up a limiting current value from said table as a function of said time indicator from said clock and applies said limiting current value to said current limiter in order to limit an input current to said circuit.

**22.** A control system as in claim 21 wherein said multi-dimensional table is pre-loaded from an external source.

**23.** A control system as in claim 21 wherein said multi-dimensional table is pre-loaded from said processor.

**24.** A control system as in claim 21 wherein said current limiter is a field effect transistor switch.

**25.** A control system as in claim 21 wherein said current limiter is a pass transistor.

**26.** A control system as in claim 21 wherein said current limiter is a triac controller.

**27.** A data processor control system that controls a current to a circuit, said control system comprising:

a current limiter, said current limiter constructed and arranged to regulate said current to said circuit;
a clock, said clock constructed and arranged to supply a time indicator to said processor;
a memory, said memory constructed and arranged to store a table of values, said table having at least two dimensions containing timing values and one dimension containing current values; and
a processor, said processor constructed and arranged to control said current limiter, said processor further constructed and arranged to access said table in said memory and to receive said time indicator from said clock; wherein said processor looks up a limiting current value from said table as a function of said time indicator from said clock and applies said limiting current value to said current limiter in order to limit an input current to said circuit.

**28.** A control system as in claim 27 wherein said multi-dimensional table is pre-loaded from an external source.

**29.** A control system as in claim 27 wherein said multi-dimensional table is pre-loaded from said processor.

**30.** A control system as in claim 27 wherein said current limiter is a field effect transistor switch.

**31.** A control system as in claim 27 wherein said current limiter is a pass transistor.

**32.** A control system as in claim 27 wherein said current limiter is a triac controller.

**33.** A control system as in claim 1 wherein said memory is a non-volatile memory.

**34.** A data processor control system that controls a current to a circuit, said control system comprising:

a current limiter, said current limiter constructed and arranged to regulate said current to said circuit;
a time index;
a memory, said memory constructed and arranged to store a one-dimensional table of current values; and
a processor, said processor constructed and arranged to control said current limiter, said processor further constructed and arranged to access said one-dimensional table in said memory; wherein said processor uses said time index to looks up a limiting current value from said one-dimensional table and apply said limiting current value to said current limiter in order to limit an input current to said circuit.

**35.** A control system as in claim 34 wherein said one dimensional table is pre-loaded from an external source.

**36.** A control system as in claim 34 wherein said one dimensional table is pre-loaded from said processor.

**37.** A control system as in claim 34 wherein said current limiter is a field effect transistor switch.

**38.** A control system as in claim 34 wherein said current limiter is a pass transistor.

**39.** A control system as in claim 34 wherein said current limiter is a triac controller.

**40.** A control system as in claim 34 further comprising a delay, said delay used in conjunction with said time index to control the ramp rate of said current to said circuit.

**41.** A method of controlling the current to a circuit, said method comprising the steps of:

(a) setting a time index to zero;
(b) checking if said time index is less than the size of a one-dimensional table stored in a memory;
(c) if said time index is not less than said size of said one-dimensional table setting a current value to full on, otherwise looking up said current value from said one-dimensional table using said time index as an offset;
(d) limiting said current to said circuit according to said current value;
(e) incrementing said time index; and
(f) repeating step (b).

**Figure 1**

Figure 2

17

Figure 4

Figure 5

230

| | |
|---|---|
| Offset register | 232 |
| Capacitance register | 234 |
| Resistance register | 236 |
| $t_0$ (empty) | |
| ... | 238 |
| $t_{100-1}$ (empty)... | |
| $t_{100}$ (empty)... | |
| $i_0$ (empty)... | |
| ... | 240 |
| $i_{100}$ (empty) | |

Figure 6

230

| | |
|---|---|
| Offset register | — 232 |
| Capacitance register | — 234 |
| Resistance register | — 236 |
| 0 (Time Value) | |
| 1 | |
| 2 | |
| 3 | |
| 4 | 238 |
| 5 | |
| ... | |
| 99 | |
| 100 | |
| 5 (Current Value) | |
| 9 | |
| 13 | |
| 17 | 240 |
| 21 | |
| ... | |
| 99 | |
| 100 | |

# Figure 7

```
                    ┌─────────────┐
                    │    Start    │────── 700
                    └──────┬──────┘
                           │
                           ▼
                    ┌─────────────┐
                    │   Time = 0  │────── 702
                    │  from Clock │
                    └──────┬──────┘
                           │
                           ▼
                          ╱ ╲
                        ╱     ╲ ─── 704
                      ╱         ╲
                    ╱   Time Index > Table Size ╲
         Yes      ╱            ?                  ╲
        ◄────────╱                                 ╲◄────┐
                 ╲                                 ╱     │
                   ╲                             ╱       │
                     ╲          No             ╱         │
                       ╲         │           ╱           │
                         ╲       │         ╱             │
                           ╲     ▼       ╱               │
                                                         │
  ┌─────────────────────┐   ┌─────────────┐              │
  │ Current Value = Full On│ │ Look Up Time In│── 706     │
  └──────────┬──────────┘   │ the Table to Obtain│       │
       712   │              │ the Current Value │        │
             ▼              └──────┬──────┘               │
     ┌─────────────┐               │                      │
     │     End     │── 714         ▼                      │
     └─────────────┘      ┌─────────────┐                 │
                          │ Delay One Cycle Time│── 708    │
                          └──────┬──────┘                  │
                                 │                         │
                                 ▼                         │
                          ┌─────────────┐                  │
                          │  Increment  │── 710            │
                          │  Time Index │                  │
                          └──────┬──────┘                  │
                                 └─────────────────────────┘
```

800

802

802

802

802

802

802

802

802

$I_0$

$I_1$

$I_2$

$I_3$

$I_4$

$I_5$

$I_6$

$I_7$

Figure 8